Europäisches Patentamt

European Patent Office

Office européen des brevets

(11) Veröffentlichungsnummer: **0 238 096**
**A2**

# (12) EUROPÄISCHE PATENTANMELDUNG

(21) Anmeldenummer: 87104179.4

(22) Anmeldetag: 21.03.87

(51) Int. Cl.⁴: **B29B 13/00** , B29B 9/16

(30) Priorität: 21.03.86 DE 3609583

(43) Veröffentlichungstag der Anmeldung:
23.09.87 Patentblatt 87/39

(84) Benannte Vertragsstaaten:
AT BE DE ES FR GB IT LU NL SE

(71) Anmelder: UNIROYAL ENGLEBERT Reifen GmbH
Hüttenstrasse 7
D-5100 Aachen(DE)

(72) Erfinder: Harms, Engelbert G., Dr.-Ing.
Dipl.-Ing.
Auf dem Anger 11
D-5100 Aachen(DE)

(54) Verfahren zum Behandeln der Oberflächen und Schnittflächen von Rohkautschukballen bzw. Rohkautschukmischungsteilen mit einem Klebrigkeit beseitigenden Trennmittel.

(57) Verfahren zum Behandeln der Oberflächen, insbesondere Schnittoberflächen, von Rohelastomeren oder Rohkautschukmischungsteilen mit einem Klebrigkeit beseitigenden Trennmittel.

Die Erfindung betrifft ein pulverförmiges Trennmittel, das in der Form als Pulverkautschuk auf die klebrigen Oberflächen der rohkautschukballen bzw. Rohkautschukmischungsoberflächen aufgebracht die klebenden Oberflächen abstumpft und die Qualität bei der Weiterverarbeitung wesentlich erhöht, wobei die Zusammensetzung des Pulverkautschuks gezielt auf die Anwendung des späteren Gummiprodukts bereits in der Mischungsphase erfolgt.

EP 0 238 096 A2

**Verfahren zum Behandeln der Oberflächen und Schnittflächen von Rohkautschukballen-bzw. Rohkautschukmischungsteilen mit einem Klebrigkeit beseitigenden Trennmittel.**

Die Erfindung bezieht sich auf ein Verfahren zum Behandeln der Oberflächen und insbesondere der Schnittoberflächen eines Elastomeren beliebiger Form und Beschaffenheit mit einem die Klebrigkeit beseitigenden Trennmittel.

Es ist bekannt, in der kautschukverarbeitenden Industrie verschiedene Pudermittel, Tauch-oder Spritzlösungsmittel zum Trennen der Elastomerteile, insbes. Rohkautschukballenteile, der Rohkautschukmischungsteile sowie daraus hergestellter Zwischenformen zu verwenden. Tauch-und Sprühlösungen sind insbesondere Suspensionen von Pudermitteln in Wasser. Vgl. dazu Kleemann, Rezeptentwicklung, VEB Deutscher Verlag für Grundstoffindustrie, 1966, Seiten 593 bis 596, Trennmittel, Gleitmittel und Formeneinsprühmittel; K.F. Heinisch, Kautschuk-Lexikon, Gentner-Verlag, 1966, Seite 189, Formtrennmittel; Handbuch für die Gummiindustrie, Bayer AG, 1970, Seiten 609-612, Trennmittel für- Rohmischungen und Halbfabrikate, Seite 668, Gleit-und/oder Formentrennmittel; W. Hofmann, Kautschuk-Technologie, Gentner-Verlag, 1980, Seiten 391-393, Trennmittel, Pudermittel und Trennmittel.

Diese Trennmittel haben die Aufgabe zu erfüllen, Elastomerteile am Zusammenkleben zu hindern. Dies ist zum Beispiel der Fall bei zerkleinerten Naturkautschukballen in sogenannten Blend- oder Mischtrommeln oder in Zwischenspeicherbehältern oder Silos. Dies ist des weiteren der Fall bei Kautschukmischungsfellen und bei Kautschuk-oder Kautschukmischungspellets beliebiger Rezeptur, Mischstufe, Form und Größe. Dies ist ferner der Fall bei unvulkanisierten Zwischenformen, die während des Fabrikationsprozesses auf Trägern, wie Palletten, gelagert, in Behältern transportiert und abgelegt werden müssen.

Die Trennmittel erfüllen auch eine Funktion als Schutzschicht bei den Vulkanisaten.

Bekannte Trennmittel sind beispielweise Talkum in Puderform oder in wässriger Lösung. Es ist ein nicht in Kautschuk lösfähiges Mittel und kann daher nachteilig nicht verschweißte Stellen zwischen den Elastomerschichten ausbilden. Es erfüllt zwar die Funktion der Klebrigkeitsabstumpfung, es ist jedoch grundsätzlich ein Fremdstoff, ein Fremdkörper für das herzustellende elastomere Produkt.

Weitere Trennmittel sind das in wässriger Lösung vorliegende Zinkstearat, das mit einem Netzmittel zusammen angewandt in der Kautschukmischung lösbar ist, und das Magnesiumstearat sowie das Kaolin. Diese Mittel werden in Tauchbecken oder durch Sprühdüsen auf die Klebrigkeit aufweisenden Oberflächen des Elastomeren aufgebracht. Des weiteren sind als Trennmittel bekannt eine Kombination aus fettsauren Salzen mit wasserlöslichen hochmolekularen Stoffen, mit Wasser angepastet oder wasserlösliche Polyäthylenoxyde, Lösungen von synthetischen Wachsen und Thermoplasten, Fettsäureamide, Polyäthylen, Glykole oder Silicone in Lösungsform.

Die Kosten für Ausbildung und Wartung der Becken, der Rührvorrichtungen für die Suspensionen, der reparaturenfälligen Anlagen oder deren Teile, wie z.B. verstopfte Düsen oder Rohrleitungen, und für die Unterhaltung während des Betriebes sind außergewöhnlich hoch und lassen sich durch Wahl geeigneter anderer Methoden und Mittel reduzieren.

Da Trenn-und Pudermittel der bisher bei Rohelastomeren verwendeten Stoffe und Formen stets Fremdstoffe zum Elastomer sind, können sie abhängig von Art und Menge erheblich die physikalischen Eigenschaften der Kautschukmischungen nachteilig beeinflussen. Außerdem sind sie an zum Teil wesentlichen Oberflächenveränderungen beteiligt, die zu Verschweissungsstörstellen führen.

Ein zusätzlicher Nachteil bei der Verarbeitung ist bei puderförmigen Trennmitteln die hohe Staubbelästigung. Bei flüssigen Trennmitteln ergeben sich Probleme bei der Herstellung und beim Einsatz des Trennmittels, weil die erhaltenen Suspensionen instabil sind.

Demzufolge muß stets für eine ausreichende Verteilung gesorgt werden. Nachteilig sind des weiteren ungleiche Auftragschichten und die Beseitigung der Feuchtigkeit nach dem Behandeln. Auf der Grundlage dieser Probleme bei der großtechnischen Anwendung von Trennmitteln ist es Aufgabe der Erfindung, daß zum Behandeln der Oberflächen von Elastomeren im Rohzustand, wie z.B. Rohkautschukballenstücken oder Rohkautschukmischungen in Fell-, Pellet-oder Chipform ein Trennmittel gegen Klebrigkeit und zur Schutzschichterzeugung eingesetzt wird, das nicht Fremdstoff für das Elastomere ist und demzufolge die Qualität bei der Behandlung der Elastomeren durch das Trennmittel verbessert.

Diese Aufgabe wird erfindungsgemäß durch die Anwendung eines unvulkanisierten Pulverkautschuks als Trennmittel gelöst. Es kann sich hierbei um handelsüblichen Pulverkautschuk, um unvulkanisierte Pulvervormischung, die Füllstoff gefüllt, insbesondere die Ruß gefüllt ist und/oder weitere Zusätze enthält, handeln. Es kann eine unvulkanisierte Pulverkautschukmischung sein, die geeignet ist und Füllstoffe sowie Vulkanisationsmittel enthält. Nach der erfindungsgemäßen Anwendung wird der Pulverkautschuk auf die klebrige Oberfläche, insbesondere intensiv klebender Schnittoberflächen aufgepudert, wobei dieses dem Elastomeren artgleiche oder artverwandte Trennmittel in geringstmöglicher Menge zugeteilt, überschüssiges Trennmittel entfernt und so eine gleichmäßig dünne Auftragbehandlung erfolgt. Diese reicht aus, um das Aneinanderkleben insbesondere der Schnittoberflächen zu verhindern.

Der Pulverkautschuk kann als Pulverbatch die elastomere Komponente und den Füllstoff, wie Ruß und/oder Kieselsäure, u.a.m.enthalten. Häufig ist der Füllstoff auf das Pulverkautschukelastomere aufgetrommelt. Die Füllstoffe können auch inkorporiert, d.i. während der Polymerisationsphase eingebracht, vorliegen.

Die Pulverkautschukmischung kann zu der elastomeren und füllenden Komponente auch weitere Mischungsbestandteile bis hin zur fertigen vulkanisierbaren Pulverkautschukmischung enthalten. Die Zusammensetzung des Trennmittels kann auf den jeweiligen Anwendungsfall und insbesondere gezielt auf die physikalischen und chemischen Eigenschaften der elastomeren Teile, der Felle, Pellets, Chips oder anderer Formen, für deren späteren Einsatz abgestimmt werden.

Das Trennmittel Pulverkautschuk in unterschiedlicher Form und Zusammensetzung wird zum Beispiel mit Hilfe einer Pudervorrichtung oder ähnlichen Auftragvorrichtung auf die klebende Oberfläche des Rohkautschukballenteils, des Kautschukmischungsfelles oder -pellets aufgebracht, wobei eine Zusatzvorrichtung dafür sorgt, daß möglicherweise in der Menge je Flächeneinheit zu viel aufgebrachter Pulverkautschuk sofort entfernt wird. Dazu sind Bürsten, Abzugmittel oder Wendevorrichtungen einsetzbar.

Rohkautschukballen werden aus Gründen der Qualitätsverbesserung geteilt, wobei die sehr intensiv klebenden Schnittstellen der Ballenstücke durch das Pudermittel abgestumpft werden. Da es problematisch ist, nur die Schnittstellen abzustumpfen, werden die Oberflächen insgesamt behandelt, wobei jedoch die Schnittstellen vorrangig mit dem Pulverkautschuk in Berührung gelangen, wenn Ballenstücke aus verschiedenen Chargen gemischt oder geknetet werden.

Das Trennmittel kann auch mit Hilfe oder in Verbindung mit einem Fließbett auf die klebrige Oberfläche aufgetragen werden, indem das elastomere Teil oder Fell oder die Pellets in ein solches Fließbett eingetaucht oder hindurchbewegt werden.

Pulverkautschuk in beliebiger Form und Zusammensetzung als Trennmittel für klebrige Oberflächen eines unvulkanisierten elastomeren Formkörpers oder Halbfabrikats zu verwenden, ist nach EP 01 41 087 bekannt. Bei dieser Art der Behandlung wird der Pulverkautschuk auf die klebrigen Oberflächen eines bereits konfektionierten Kautschukteils aufgebracht. Dabei ist mindestens die freiliegende Oberfläche eines band-oder plattenförmigen Halbfabrikats mit Pulverkautschuk zu bestäuben. Der Pulverkautschuk ersetzt hierbei das bislang als Trennmittel verwendete Gummirauhmehl, ein Gummiabfallprodukt bei der Abrauhung von Reifen, die runderneuert werden.

Bei der Rohelastomer-bzw. Elastomermischungsfallbehandlung kann Gummirauhmehl als Trennmittel nicht verwendet werden. Hier werden stets die eingangs genannten Trennmittel eingesetzt.

Überraschenderweise zeigt sich, daß die Bestäubung mittels Pulverkautschuk auch auf die Oberflächen der Rohkautschukteileoberfläche oder Kautschukmischungsteileoberflächen aufgebracht bereits dort schon eine Qualitätsbeeinflussung ergibt, die die bisherige Behandlung mit Trennmitteln artfremder Stoffe voll ersetzen kann und mit Vorteilen aufwartet, die die bekannten Trennmittel nicht bieten. Die Qualitätsvorteile sind erkennbar in optimalen Verschweißungsstellen bei der späteren Vernetzung bzw. Vulkanisation der Elastomerteile, verbesserter Oberflächenbeschaffenheit von Vulkanisaten sowie verbesserten chemischen und physikalischen Mischungseigenschaften und verbesserter Produktqualität. Die Vorteile ergeben sich auch in der Bereitstellung, Wartung und Unterhaltung sehr viel günstigerer Bepuderungsvorrichtungen, so daß insgesamt eine hohe Kostenreduzierung vorliegt.

## Ansprüche

1. Verfahren zum Behandeln der Oberflächen, insbesondere der Schnittoberflächen, von Rohelastomeren, insbesondere Rohkautschukballenteilen, Rohkautschukmischungsteilen in Form von Fellen, Pellets oder Chips und daraus hergestellten Zwischenformen mit einem pulverigen Trennmittel, das die Klebrigkeit beseitigt, gekennzeichnet durch die Verwendung von unvulkanisiertem Pulverkautschuk in unterschiedlicher Form und Zusammensetzung ,das als Trennmittel auf die Oberfläche und Schnittfläche der Rohelastomere oder Rohkautschukmischungen aufgebracht wird.

2. Verfahren nach Anspruch 1, dadurch gekennzeichnet, daß der Pulverkautschuk durch an sich bekanntes Pudern oder Tauchen aufgebracht wird.